# EUROPÄISCHE PATENTSCHRIFT

(11) **EP 0 303 094 B1**
(45) Veröffentlichungstag und Bekanntmachung des Hinweises auf die Patenterteilung: **29.09.1993**
(21) Anmeldenummer: 88111989.5
(22) Anmeldetag: 26.07.1988
(51) Int. Cl.: B29C 65/78, B29C 65/20, B29L 23/00, B29L 31/10

(54) **Vorrichtung zum Verschweissen von Kunststoffprofilen**
Apparatus for welding profiled plastic elements
Appareil pour le soudage de profilés en matière plastique

(30) Priorität: 11.08.1987 DE 3726652
(43) Veröffentlichungstag der Anmeldung: 15.02.1989
(73) Patentinhaber: Urban GmbH & Co. Maschinenbau KG, D-87700 Memmingen (DE)
(72) Erfinder: Tesch, Wolfgang, D-8941 Heimertingen (DE); Kreissl, Reinhard, D-8941 Kronburg (DE); Mähner, Gerhard, D-8940 Memmingen (DE)
(74) Vertreter: Pfister, Helmut, Dipl.-Ing.

(56) Entgegenhaltungen:
- AU-A- 18 916
- DE-A- 3 124 191
- DE-A- 3 304 512
- DE-B- 1 134 871
- DE-U- 7 043 938
- US-A- 4 397 245
- US-A- 4 705 438
- US-A- 4 723 769

## Beschreibung

Die Erfindung betrifft eine Vorrichtung zum Verschweißen von Kunststoffprofilen zu Fensterrahmen od.dgl., mit einem Gestell, das Fixiereinrichtungen und mehrere bewegliche Schweißeinrichtungen für die Profile aufweist.

Verschweißvorrichtungen der vorerwähnten Art sind bekannt. Sie dienen dazu, Fensterrahmen, und zwar sowohl den Fensterflügel als auch Außenrahmen bzw. entsprechende Rahmen für Türen zu fertigen.

Dabei wird ein Gestell benutzt, an dem mittels mehrere Schienen Fixiereinrichtungen für die Profile sowie die zugehörigen Schweißeinrichtungen zur Verschweißung der Profilenden vorgesehen sind.

Bei einer vorbekannten Bauweise ist das Gestell aufrechtstehend mit leichter Neigung vorgesehen und die Bedienungsperson legt die abgelängten Kunststoffprofile in die vorgesehenen Fixiereinrichtungen ein, nachdem die einzelnen Elemente der Vorrichtung entsprechend den Maßen des zu fertigenden Rahmens in bestimmte Positionen gebracht worden sind. Die Bedienungsperson steht dabei vor dem Gestell auf dessen Bedienungsseite. Der Vorteil dieser Bauweise besteht darin , daß die Schweißvorrichtung gut zugänglich ist und daß auch verhältnismäßig große Abmessungen von Vorrichtungen bzw. Rahmen beherrschbar sind.

Nach dem Schweißvorgang werden die gefertigten Rahmen in der Regel aufrechtstehend, seitlich abtransportiert.

Bei einer anderen vorbekannten Bauweise ist das Gestell im wesentlichen horizontal ausgerichtet und die Bedienungsperson legt die abgelängten Kunststoffprofile auf den Rahmen auf. Die liegende Anordnung des Gestells hat den Vorteil, daß der Abtransport der gefertigten Rahmen zu den weiteren Bearbeitungsstationen in liegender Stellung der Rahmen erfolgen kann, zumal auch in der Regel die nachfolgenden Arbeitsmaschinen, beispielsweise zur Bearbeitung der Schweißraupen, die Rahmen in liegender Position bearbeiten.

Die liegende Position der Rahmen hat weiter den Vorteil, daß die Rahmen beim Transport wenig beansprucht werden. Von Nachteil ist jedoch, daß insbesondere bei größeren Abmessungen der Rahmen der einzelnen Teile der Schweißvorrichtung schlecht erreichbar sind. Dabei muß beachtet werden, daß die Schweißvorrichtung in der Regel nicht von allen Seiten gleich gut zugänglich ist, da an einer Seite die Transportvorrichtung vorgesehen ist. Die schlechte Zugänglichkeit behindert den zügigen Arbeitsablauf.

Der Erfindung liegt die Aufgabe zugrunde, eine Vorrichtung der eingangs angegebenen Gattung dahingehend zu verbessern, daß auch die Fertigung von Rahmen mit verhältnismäßig großen Abmessungen ohne Behinderung möglich ist und daß auch die günstigste Art des Weitertransportes durchführbar ist.

Zur Lösung dieser Aufgabe geht die Erfindung aus von einer Vorrichtung der eingangs beschriebenen Gattung und schlägt vor, daß das Gestell aus einer aufrechten, annähernd senkrechten Position in eine im wesentlichen waagrechte Position verschwenkbar ist, um das Gestell in der aufrechten Position mit den zu verschweißenden Profilstäben zu beschicken und nach dem Verschweißen die Fensterrahmen in waagrechter Position abzutransportieren.

Die verschwenkbare Ausbildung des Gestells ist mit geringem Aufwand durchführbar. Die Vorteile, die die Erfindung erreicht, sind jedoch beträchtlich. In der aufrechten Position erfolgt das Einlegen und Fixieren der Profilstäbe und das anschließende Verschweißen der einzelnen Profilstäbe zu dem Rahmen. Nach dem Schweißvorgang und gegebenenfalls auch schon während des Schweißvorgangs kann das Gestell aus der im wesentlichen senkrechten Position in die waagrechte Position verschwenkt werden, in der dann der Weitertransport des Rahmens erfolgt.

Auf diese Weise werden einerseits die Vorteile der leichten Zugänglichkeit der Schweißvorrichtung in der senkrechten Position erhalten, die es erlaubt, auch sehr große Abmessungen ohne Hilfsmittel zu beherrschen. Andererseits können auch die Vorteile des horizontalen Transports benutzt werden, die beispielsweise auch darin liegen, daß der Transportvorgang schon bei mäßiger Abkühlung der Schweißnaht durchführbar ist, da die Belastungen beim Transport gering sind.

Die erfindungsgemäße Vorrichtung kann aber auch noch in der herkömmlichen Weise benutzt werden, nämlich derart, daß der Weitertransport in senkrechter Position erfolgt. Dies kann dann von Vorteil sein, wenn Rahmen verschiedener Art verschiendenen Transporteinrichtungen zuzuleiten sind, um unterschiedlichen Bearbeitungsstationen zugeführt zu werden.

Die Erfindung kann in verschiedener Weise ausgestaltet werden. In der Regel ist ein Untergestell mit einem Schwenklager mit horizontaler Schwenkachse für das Gestell vorgesehen. Das Gestell kann sich aber auch über geeignet ausgebildete Lenker auf einem Untergestell abstützen, wobei die Lenker eine verschiedenartige Ausgestaltung aufweisen können, um zu erreichen, daß das Gestell aus einer im wesentlichen senkrechten Position in eine horizontale Position umlegbar ist. Beispielsweise sind hierbei sich kreuzende Lenker anwendbar.

Für den Abtransport der gefertigen Kunststoffprofilrahmen in der waagrechten Position des Gestells bieten sich zwei Lösungen an. Der Abtransport kann insbesondere in Richtung der Schwenkachse des Gestells erfolgen.

Es ist aber auch möglich, den Abtransport über diejenige Kante des Gestells vorzunehmen, die sich in der aufgerichteten Position oben befindet.

Insbesondere bei der zuletzt genannten Bauweise kann es sich empfehlen, das Gestell soweit zu neigen, daß die Kunststoffprofilrahmen vom Gestell abgleiten, was die Bauweise der Transporteinrichtung beträchtlich vereinfacht.

In der Zeichnung ist ein Ausführungsbeispiel der Erfindung schematisch dargestellt. Es zeigen:
- Fig. 1: eine Seitenansicht einer erfindungsgemäßen Schweißvorrichtung in aufgerichteter Position des Gestells und
- Fig. 2: eine Seitenansicht der Vorrichtung nach der Fig. 1 in abgesenkter Position des Gestells.

Das Untergestell 2 steht auf dem Boden 6. Im Schwenklager 3 trägt das Untergestell 2 das Gestell 1, das eine ansich bekannte Ausbildung aufweist. Das Gestell trägt insbesondere insgesamt vier Schweißvorrichtungen 11 zur Verschweißung der vier Ecken eines Rahmens, wobei die einzelnen Schweißeinrichtungen 11 durch Schienen und ähnliche Mittel derart geführt sind, daß der gegenseitige Abstand leicht einstellbar und veränderbar ist.

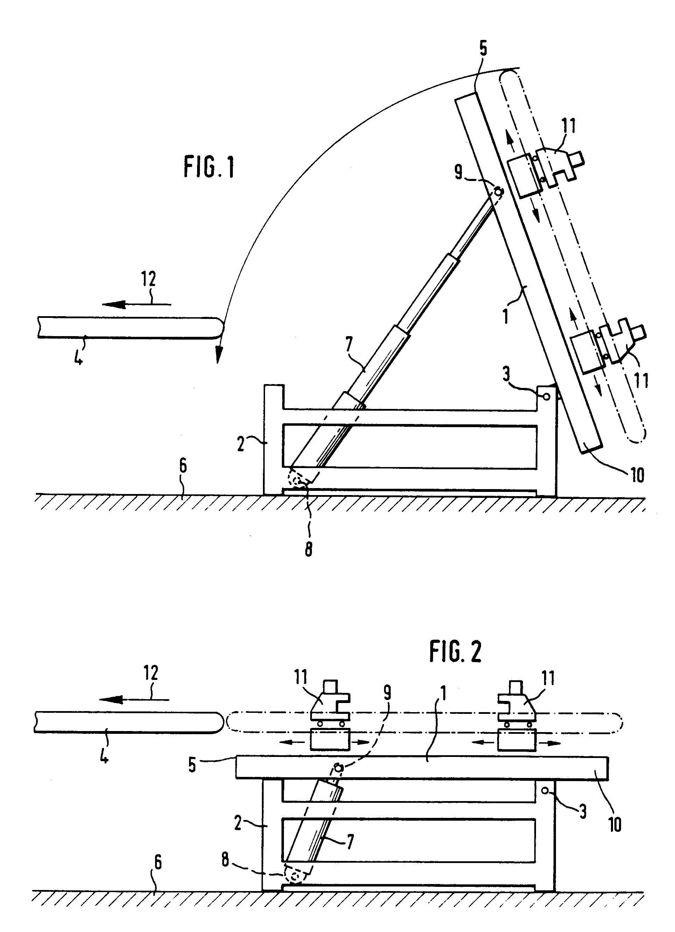

Ferner trägt das Gestell 1 auch Fixiereinrichtungen zur Fixierung der eingelegten Kunststoffprofile. Die Bedienungsperson, die die Kunststoffprofile in entsprechender Länge in die Schweißvorrichtung einlegt, steht in der Darstellung der Fig. 1 rechts des Gestells 1. Die Größe des Gestells 1 in horizontaler Richtung ist frei wählbar. Aber auch in vertikaler Richtung sind vergleichsweise große Abmessungen beherrschbar. Auch ohne Hilfsmittel kann die Bedienungsperson im oberen Bereich in der Nähe der oberen Kante 5 hantieren.

Die in der Fig. 1 gezeigte aufgerichtete Position schließt mit der Vertikalen etwa einen Winkel von 20 Grad ein. Der Winkel kann aber auch in anderer Weise gewählt werden. Eine gewisse Neigung erleichtert die Arbeit.

Die aufgerichtete Position wird durch die Hubeinrichtung 7 erhalten, die im gezeigten Ausführungsbeispiel als Hubzylinder ausgebildet ist, der sich bei 8 am Untergestell 2 und bei 9 am Gestell 1 abstützt. Anstelle eines Zylinders können auch andere Hubeinrichtungen Verwendung finden, beispielsweise Zahnstangentriebe, Seilzüge od.dgl. .

Günstig ist es, wenn die Anordnung derart getroffen wird, daß das Gestell 1 mit seinem Teil 10 über das Schwenklager 3 vorsteht, so daß dieser Teil 10 bei der aufrechten Stellung über das Schwenklager 3 nach unten vorsteht. Die Höhe der Vorrichtung kann dabei ganz für den Arbeitsbereich am Gestell 1 ausgenützt werden.

In der abgesenkten Stellung des Gestells 1 ( Fig. 2) ruht das Gestell 1 auf dem Untergestell 2 und nimmt eine im wesentlichen horizontale Position ein. Ein gefertigter Rahmen aus Kunststoffprofilen, der in der Zeichnung nicht näher dargestellt ist, kann leicht über eine Einrichtung 4 zum Abtransport in Richtung des Pfeiles 12 weitergefördert werden.

Wenn das Gestell 1 noch stärker abgesenkt wird und wenn der gefertigte Rahmen aus den Kunststoffprofilen beispielsweise auf Rollen lagert, kann der Rahmen auch über die Kante 5 auf einer geeigneten Bahn herabgleiten.

Im Ausführungsbeispiel ist ein Schwenklager 3 gezeigt zur Verbindung des Gestells 1 mit dem Untergestell 2. Dies ist nur beispielsweise zu verstehen. Das Schwenklager 3 kann durch geeignete Lenker ersetzt sein oder es wird zwischen dem Gestell und dem Untergestell ein Rollbogen vorgesehen oder eine andere Anordnung, die es erlaubt, das Gestell 1 in die verschiedenen Positionen zu bringen.

## Patentansprüche

1. Vorrichtung zum Verschweißen von Kunststoffprofilen zu Fensterrahmen oder dergleichen, mit einem Gestell, das Fixiereinrichtungen und bewegliche Schweißeinrichtungen (11 ) für die Profile aufweist, dadurch gekennzeichnet, daß das Gestell (1) aus einer aufrechten, annähernd senkrechten Position in eine im wesentlichen waagrechte Position verschwenkbar ist, um das Gestell (1) in der aufrechten Position mit den zu verschweißenden Profilstäben zu beschicken und nach dem Verschweißen die Fensterrahmen in waagrechter Position abzutransportieren.

2. Vorrichtung nach Anspruch 1, dadurch gekennzeichnet, daß ein Untergestell (2) mit einem Schwenklager (3) mit horizontaler Schwenkachse für das Gestell (1) vorgesehen ist.

3. Vorrichtung nach Anspruch 1, dadurch gekennzeichnet, daß sich das Gestell über Lenker auf einem Untergestell abstützt.

4. Vorrichtung nach einem oder mehreren der vorhergehenden Ansprüche, gekennzeichnet durch Einrichtungen (4) zum Abtransport der gefertigten Kunststoffprofilrahmen in der waagrechten Position des Gestells (1).

5. Vorrichtung nach einem oder mehreren der vorhergehenden Ansprüche, dadurch gekennzeichnet, daß der Abtransport der gefertigten Kunststoffprofilrahmen in Richtung der Schwenkachse des Gestells (1) erfolgt.

6. Vorrichtung nach einem oder mehreren der vorhergehenden Ansprüche, dadurch gekennzeichnet, daß der Abtransport der gefertigten Kunststoffprofilrahmen über diejenige Kante (5) des Gestells (1) erfolgt, die sich in der aufgerichteten Position oben befindet.

7. Vorrichtung nach einem oder mehreren der vorhergehenden Ansprüche, dadurch gekennzeichnet, daß das Gestell soweit neigbar ist, daß die Kunststoffprofilrahmen vom Gestell abgleiten.

## Claims

1. Device for welding plastic profiles to windows or the like, said device comprising a rack having retaining elements and movable welding devices (11) for the profiles, characterized in that the rack (1) is pivotable from an upright, approximately vertical position into an essentially horizontal position in order to charge the rack (1) in the upright position with the profile sections to be welded and to transport the frames away in the horizontal position after welding.

2. Device according to claim 1, characterized in that a base frame (2) having a swivel bearing (3) with a horizontal swivel axis for the rack (1) is provided.

3. Device according to claim 1, characterized in that the rack is supported on a base frame via levers.

4. Device according to one or more of the preceding claims, characterized by devices (4) for transporting away the plastic profile frames with the rack (1) in a horizontal position.

5. Device according to one or more of the preceding claims, characterized in that the transport of the manufactured plastic profile frames is effected in the direction of the swivel axis of the rack (1).

6. Device according to one or more of the preceding claims, characterized in that the transport of the manufactured plastic profile frames is effected via that edge (5) of the rack (1) which is at the top in the upright position.

7. Device according to one or more of the preceding claims, characterized in that the rack is capable of being inclined to such an extent that the plastic profile frames will glide off from the rack.

## Revendications

1. Appareil pour le soudage de profilés en matière plastique en des cadres de fenêtres ou analogues, comportant un bâti qui présente des moyens de fixation et des moyens de soudage mobiles (11) pour les profilés, caractérisé en ce que le bâti est monté pivotant à partir d'une position dressée sensiblement verticale vers une position sensiblement horizontale, pour charger le bâti (1), en position dressée, avec les baguettes de profilés à souder et pour évacuer après soudage les cadres de fenêtres en position horizontale.

2. Appareil selon la revendication 1, caractérisé en ce qu'il est prévu un bâti inférieur (2) muni d'un palier de pivotement (3) à axe de pivotement horizontal pour le bâti (1).

3. Dispositif selon la revendication 1, caractérisé en ce que le bâti s'appuie sur le bâti inférieur par des bras oscillants.

4. Appareil selon l'une ou plusieurs des revendications précédentes, caractérisé par des moyens (4) pour évacuer les cadres de profilés en matière plastique préparés, dans la position horizontale du bâti (1).

5. Dispositif selon l'une ou plusieurs des revendications précédentes, caractérisé en ce que l'évacuation des cadres de profilés en matière plastique préparés s'effectue dans la direction de l'axe de pivotement du bâti (1).

6. Appareil selon l'une ou plusieurs des revendications précédentes, caractérisé en ce que l'évacuation des cadres de profilés en matière plastique préparés s'effectue par le bord (5) du bâti (1) qui se trouve en haut dans la position dressée.

7. Dispositif selon l'une ou plusieurs des revendications précédentes, caractérisé en ce que le bâti est inclinable jusqu'au point où les cadres de profilés en matière plastique glissent en bas à partir du bâti.
